# EUROPÄISCHE PATENTANMELDUNG

(11) **EP 4 715 574 A1**
(43) Veröffentlichungstag der Anmeldung: **25.03.2026**
(21) Anmeldenummer: 24202335.6
(22) Anmeldetag: 24.09.2024
(51) Int. Cl.: G06F 8/35, G06N 3/0455, G05B 19/418, G06F 8/36

(54) **VERFAHREN UND VORRICHTUNG ZUR ERZEUGUNG EINES PROGRAMMCODES**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Computer-implementiertes Verfahren zum Erzeugen eines Programmcodes zum Betreiben eines technischen Geräts durch eine Betriebs-Vorrichtung mit Betriebs-Daten, wobei folgende Schritte ausgeführt werden:
a) Bereitstellen der Betriebs-Daten, umfassend Markierungen der Betriebs-Daten hinsichtlich vordefinierter Merkmale, welche die Betriebs-Daten strukturell und/oder funktionell beschreiben,
b) Bereitstellen einer Eingabe-Aufforderung, umfassend Definitionen zur Analyse in einer domänen-spezifischen Sprache und Anweisungen zur Erzeugung des Programmcodes,
c) Erzeugen des Programmcodes mithilfe des großen Sprach-Modells unter Verwendung der Betriebs-Daten und der Eingabe-Aufforderung, und Bereitstellen des Programmcodes,
d) Bereitstellen von Referenz-Programmcodes zum Betrieb eines allgemeinen technischen Geräts,
e) Klassifizieren der Referenz-Programmcodes mithilfe eines bereitgestellten Programmcode-Modells auf Basis künstlicher Intelligenz, und Zuordnen in Gruppen unter Berücksichtigung der Merkmale,
f) Erzeugen von semantischen Programmcode-Beschreibungen mithilfe des Programmcode-Modells für die Merkmale und/oder Übergabe-Parameter der Referenz-Programmcodes,
g) Parsen der Referenz-Programmcodes und des erzeugten Programmcodes unter Anwendung der Merkmale, wobei in den Referenz-Programmcodes die Programmcode-Beschreibungen berücksichtigt werden, und Erhalten eines Ziel-Programmcodes.

## Beschreibung

Die Erfindung betrifft ein computer-implementiertes Verfahren und ein System zur Erzeugung eines Programmcodes zum Betreiben eines technischen Geräts mit Betriebs-Daten.

Die Erfindung betrifft ferner ein Computer-Programm-Produkt, ein computerlesbares Speichermedium oder einen computerlesbaren Datenträger, und ein Datenträgersignal.

In der aktuellen industriellen Fertigungslandschaft besteht ein erheblicher Bedarf an Bildverarbeitungs-Know-how und -Technologien, um Herausforderungen im Zusammenhang mit Qualitätssicherung, Prozessoptimierung, Automatisierung und Effizienzsteigerung zu bewältigen.

Da die Branche die digitale Transformation weiter vorantreibt, wird erwartet, dass die Rolle von Computer Vision in der Fertigung weiter zunehmen und die Innovation und Wettbewerbsfähigkeit in der Branche vorantreiben wird.

In der aktuellen Fertigungslandschaft gibt es einen bemerkenswerten Mangel an Personen mit fortgeschrittenen Seh- und Programmierfähigkeiten.

Der interdisziplinäre Charakter der Implementierung von Computer-Vision-Lösungen in der Fertigung verschärft diesen Mangel zusätzlich, da er ein tiefes Verständnis sowohl der technologischen Prinzipien als auch des domänenspezifischen Wissens erfordert.

Klassische Kamerasysteme mit grundlegenden Bildverarbeitungsfunktionen erfordern Bediener, die für grundlegende visuelle Inspektionsaufgaben in der Fertigung befähigt und verantwortlich sind.

Dabei ist ein grundlegendes Verständnis in der Kamerabedienung und der Bildaufnahmetechniken erforderlich, sowie die Vertrautheit mit einfachen Bildverarbeitungstools und -software, und außerdem die Fähigkeit, routinemäßige Wartungsarbeiten und Fehlerbehebungen an Kamerasystemen durchzuführen.

Dabei liegt jedoch nur eine eingeschränkte Funktionalität im Vergleich zu fortschrittlicheren Bildverarbeitungssystemen vor, sowie eine mangelnde Flexibilität und Skalierbarkeit für komplexe Anwendungen, die eine erweiterte Bildanalyse erfordern.

Außerdem ist die Fähigkeit eher begrenzt, sich an sich ändernde Fertigungsanforderungen und -umgebungen anzupassen.

Generische Kl-Cloud-Services wie "Visual Inspection Al" erfordern Bediener mit Kenntnissen in der Produktion und Qualitätssicherung, die automatisierte Inspektionslösungen ohne umfangreiche KI-Expertise implementieren möchten.

Dabei werden grundlegende Kenntnisse der Herstellungsprozesse und der Grundsätze der Qualitätskontrolle benötigt, sowie Kenntnisse im Umgang mit Cloud-basierten Plattformen und Diensten für die Datenverarbeitung und -analyse, und außerdem die Fähigkeit zur Konfiguration, Bereitstellung und Verwaltung von KI-Modellen mithilfe von vorgefertigten Tools und APIs, die von Cloud-Dienstanbietern bereitgestellt werden.

Dadurch wird der Zugang zu fortschrittlichen Kl- und maschinellen Lernalgorithmen ermöglicht, ohne dass umfangreiche Fachkenntnisse erforderlich sind, und skalierbare und flexible Lösungen unterstützt, die sich an unterschiedliche Fertigungsanforderungen und - anforderungen anpassen können. Ferner bietet die Integration in die Cloud-Infrastruktur Zugänglichkeit, Zuverlässigkeit und einfache Bereitstellung über mehrere Standorte hinweg. Jedoch bringt dies eine Abhängigkeit von der Internetverbindung, was zu Latenz- und Zuverlässigkeitsproblemen bei Echtzeitanwendungen führen kann, und es gibt Bedenken hinsichtlich Datenschutzes, Sicherheit und Einhaltung von Vorschriften bei der Verarbeitung sensibler Fertigungsdaten in der Cloud. Außerdem können potenzielle Kosten im Zusammenhang mit nutzungsbasierten Preismodellen und laufenden Abonnementgebühren die Anwendung beeinträchtigen.

Deep-Learning-Lösungen für die lokale Fertigung erfordern Datenwissenschaftler, Ingenieure für maschinelles Lernen oder KI-Spezialisten, die mit der Entwicklung kundenspezifischer Bildverarbeitungslösungen beauftragt sind, die auf spezifische Fertigungsanforderungen zugeschnitten sind.

Dabei werden fortgeschrittene Kenntnisse in Deep-Learning-Algorithmen, Computer-Vision-Techniken und Frameworks für maschinelles Lernen (z. B. TensorFlow, PyTorch) erwartet, sowie Kenntnisse in Programmiersprachen wie Python für die Modellentwicklung und - bereitstellung, und außerdem eine Expertise in den Bereichen Datenvorverarbeitung, Feature-Engineering, Modelltraining und Optimierung für Fertigungsanwendungen und ein tiefes Verständnis der Hardware- und Softwareintegration für die Bereitstellung von Deep-Learning-Modellen auf Edge-Geräten oder lokalen Servern.

Dadurch werden leistungsstarke und Echtzeit-Verarbeitungsfunktionen bereitgestellt, die für anspruchsvolle Fertigungsumgebungen geeignet sind, ein verbesserter Datenschutz und Sicherheit durch die lokale Verarbeitung sensibler Fertigungsdaten erreicht, ohne auf externe Dienste angewiesen zu sein. Außerdem kann eine bessere Kontrolle und Anpassung bei der Entwicklung, Bereitstellung und Optimierung von Deep-Learning-Modellen erfolgen, die auf spezifische Fertigungsanforderungen zugeschnitten sind.

Jedoch werden Fachkenntnisse in Deep Learning, Computer Vision und Hardware-/Softwareintegration für die Entwicklung und Bereitstellung von einem Bediener erfordert, sowie höhere Vorabkosten im Zusammenhang mit Hardware-Infrastruktur, Softwarelizenzen und laufender Wartung.

Ferner wird nur eine eingeschränkte Skalierbarkeit und Flexibilität im Vergleich zu Cloud-basierten Lösungen erreicht, insbesondere für verteilte oder geografisch verteilte Produktionsstätten.

Im Stand der Technik ist es bekannt, Programmcodes durch die Anwendung großer Sprach-Modelle, wie beispielsweise CoPilot oder ChatGPT zu erhalten, wobei die Zuverlässigkeit und Qualität der erzeugten Programmcodes meist unzureichend ist.

Microsoft Copilot ist eine Assistentenfunktion auf Basis künstlicher Intelligenz, und man kann als Copilot ein Softwaresystem verstehen, welches eine Aufgabe in Interaktion mit einem Benutzer erledigt, was im Gegensatz zu Softwaresystemen steht, welche eine Aufgabe ohne Benutzerinteraktion ausführen und als Autopilot bezeichnet werden.

ChatGPT ist ein Kl-gestützter Sprachassistent, entwickelt von OpenAI, basiert auf der GPT-4-Architektur und ist in der Lage, menschliche Sprache zu verstehen und zu erzeugen.

Es ist Aufgabe der Erfindung eine Lösung bereitzustellen, bei welcher flexibel komplexe Aufgaben bei der Steuerung von Geräten oder der Daten-Analyse von Betriebs-Daten eines Geräts, wie die optischen Qualitätskontrolle, durchgeführt werden, ohne dass ein hohes Fachwissen durch einen Bediener erforderlich ist.

Mit anderen Worten soll ein einfaches und effizientes Verfahren zur optischen Qualitätskontrolle vorgeschlagen werden.

Die Aufgabe wird durch ein computer-implementiertes Verfahren zum Erzeugen eines Programmcodes zum Betreiben eines technischen Geräts durch eine Betriebs-Vorrichtung mit Betriebs-Daten, wobei folgende Schritte ausgeführt werden:
a) Bereitstellen der Betriebs-Daten, umfassend Markierungen der Betriebs-Daten hinsichtlich vordefinierter Merkmale, welche die Betriebs-Daten strukturell und/oder funktionell beschreiben, an ein großes Sprach-Modell,
b) Bereitstellen einer Eingabe-Aufforderung, umfassend Definitionen zur Analyse in einer domänen-spezifischen Sprache und Anweisungen zur Erzeugung des Programmcodes, an das große Sprach-Modell,
c) Erzeugen des Programmcodes mithilfe des großen Sprach-Modells unter Verwendung der Betriebs-Daten und der Eingabe-Aufforderung, und Bereitstellen des Programmcodes an eine Rechen-Vorrichtung,
d) Bereitstellen von Referenz-Programmcodes zum Betrieb eines allgemeinen technischen Geräts, an die Rechen-Vorrichtung,
e) Klassifizieren der Referenz-Programmcodes mithilfe eines bereitgestellten Programmcode-Modells auf Basis künstlicher Intelligenz, und Zuordnen in Gruppen unter Berücksichtigung der Merkmale, durch die Rechen-Vorrichtung,
f) Erzeugen von semantischen Programmcode-Beschreibungen mithilfe des Programmcode-Modells für die Merkmale und/oder Übergabe-Parameter der Referenz-Programmcodes, durch die Rechen-Vorrichtung,
g) Parsen der Referenz-Programmcodes und des erzeugten Programmcodes unter Anwendung der Merkmale, wobei in den Referenz-Programmcodes die Programmcode-Beschreibungen berücksichtigt werden, und Erhalten eines Ziel-Programmcodes, durch die Rechen-Vorrichtung.

Dadurch kann erreicht werden, dass ein Bediener benutzerfreundlich und aufgabenspezifisch Aufgaben der Qualitätssicherung erledigen kann.

Durch die Abstraktion von Implementierungsdetails auf niedriger Ebene wird es einem Bediener ermöglicht, effizient durch Qualitätssicherungsprozesse zu navigieren und genaue und zeitnahe Ergebnisse zu gewährleisten, sowie einfach auf fortschrittliche Bildverarbeitungs- und Analysefunktionen zu zugreifen und diese nutzen, die auf spezifische Anforderungen zugeschnitten sind, wodurch der Arbeitsablauf bei der Qualitätskontrolle optimiert und die Produktivität gesteigert wird.

Ferner wird der Aufwand für die Markierung von Bildern, dem sogenannten "labeling", durch die Verwendung von Grundlagen- beziehungsweise Grund-/ Basis-Modellen (engl. "foundation model"), und "Few-Shot-Learning", minimiert.

Bediener können das eingebettete Grund-Modell nutzen, um sich schnell an neue Produkttypen oder Fertigungsszenarien anzupassen und so den Bedarf an umfangreichen Markierungs- und Trainings-Daten zu reduzieren.

Außerdem können Bediener einfach genaue Segmentierungsergebnisse für Qualitätssicherungsaufgaben generieren, wodurch der Zeit- und Arbeitsaufwand für Datenannotationen und Modelltraining erheblich reduziert wird.

In der Publikation Jeong Jongheon ET AL: "WinCLIP: Zero-/Few-Shot Anomaly Classification and Segmentation", 26. März 2023 (2023-03-26), XP093202218, arXiv, DOI: 10.48550/arXiv.2303.14814, https://arxiv.org/pdf/2303.14814 ist ein Beispiel für eine Zero-Shot Klassifikation beschrieben, welche hiermit durch Bezugnahme in die vorliegende Erfindung mit aufgenommen wird.

Die Betriebs-Daten können Steuer-Daten zur Steuerung eines technischen Geräts sein, oder auch Analyse-Daten, welche beispielsweise durch Sensoren beim Betrieb eines technischen Geräts erfasst werden.

Die Markierungen der Betriebs-Daten können vordefinierte Merkmale kennzeichnen, welche die Betriebs-Daten strukturell und/oder funktionell beschreiben, beispielsweise Objektbeschreibungen für die Analyse von Betriebs-Daten, oder bestimmte SteuerInformationen zur Steuerung eines Geräts.

Die Eingabe-Aufforderung weist Definitionen zur Analyse in einer domänen-spezifischen Sprache und Anweisungen zur Erzeugung des Programmcodes auf, und ist an das große Sprach-Modell gerichtet.

Das Erzeugen des Programmcodes erfolgt durch Anwendung eines großen Sprach-Modells, wie beispielsweise CoPilot oder OpenAl.

Die Referenz-Programmcodes sind Programmcodes, welche zum Betrieb eines allgemeinen technischen Geräts vorgesehen sind, und sind typischerweise in der Praxis bereits erprobt und getestet, oder bereits in ein Produkt implementiert, und daher als zuverlässig anerkannt.

Die Referenz-Programmcodes müssen nicht exakt auf dasselbe technische Gerät gerichtet sein, wie es der Anspruch vorsieht. Eine weitgehende technische Übereinstimmung der Anwendung eines Referenz-Programmcodes zu dem technischen Gerät des Anspruchs erhöht aber die Zuverlässigkeit weiter.

Somit weisen die Referenz-Programmcodes eine vorbestimmte minimale Zuverlässigkeit auf, welche über einem vorgegebenen Grenzwert liegt, wobei der Grenzwert beispielsweise durch einen Erprobungsgrad des Referenz-Programmcodes oder eine weitgehende technische Übereinstimmung zwischen der Anwendungs-Plattform des technischen Geräts, für das der Referenz-Programmcode vorgesehen ist, und des technischen Geräts des Anspruchs vorliegt.

Das bereitgestellte Programmcode-Modell auf Basis künstlicher Intelligenz kann beispielsweise durch eine Vielzahl bereitgestellter Programmcodes erzeugt und trainiert werden, wobei das Programmcode-Modell nach Kennzeichen wie Funktion, Struktur oder Übergabeparameter im Programmcode parametriert ist.

Die semantischen Programmcode-Beschreibungen der Referenz-Programmcodes können beispielsweise die Funktion oder die Parameter im Programmcode näher beschreiben.

Unter dem Betreiben eines technischen Geräts kann die Auswertung von Analyse-Daten eines technischen Geräts oder auch die Erzeugung von Steuer-Daten zur Steuerung eines technischen Geräts verstanden werden, wobei die Analyse-Daten oder die Steuer-Daten die Betriebsdaten des technischen Geräts bilden.

Ein Parser ist ein Programm, das meist Teil eines Compilers ist, wobei der Compiler dafür sorgt, dass der Programmcode korrekt in eine maschinell ausführbare Maschinensprache übersetzt wird.

Die Aufgabe des Parsers ist hierbei die Zerlegung und Umwandlung einer Eingabe in ein brauchbares Format für die Weiterverarbeitung.

Beispielsweise wird eine in einer Programmiersprache formulierte Befehlskette syntaktisch analysiert und dann in die einzelnen Bestandteile aufgegliedert.

Ein abstrakter Syntaxbaum (engl. "abstract syntax tree", kurz AST) ist eine Datenstruktur, welche in der Informatik dazu verwendet wird, die Struktur eines Programms oder Codeausschnitts darzustellen.

Es handelt sich um eine Baumdarstellung der abstrakten syntaktischen Struktur eines in einer formalen Sprache geschriebenen Textes (oft Quellcode), wobei jeder Knoten des Baums eine Konstruktion bezeichnet, die im Text vorkommt.

Die Syntax ist insofern "abstrakt", als sie nicht jedes Detail darstellt, das in der realen Syntax vorkommt, sondern nur die strukturellen oder inhaltsbezogenen Details.

Beispielsweise sind Gruppierungsklammern in der Baumstruktur implizit enthalten, sodass diese nicht als separate Knoten dargestellt werden müssen.

Ebenso kann eine syntaktische Konstruktion wie eine Wenn-Bedingung-Dann-Anweisung durch einen einzelnen Knoten mit drei Zweigen bezeichnet werden.

Dies unterscheidet abstrakte Syntaxbäume von konkreten Syntaxbäumen, die traditionell als Parsebäume bezeichnet werden.

Parsebäume werden normalerweise von einem Parser während der Übersetzung und Kompilierung des Quellcodes erstellt.

Nach der Erstellung werden dem AST durch nachfolgende Verarbeitung, z. B. Kontextanalyse, zusätzliche Informationen hinzugefügt.

Abstrakte Syntaxbäume werden auch in Programmanalyse- und Programmtransformations-Systemen verwendet.

In einer Weiterbildung der Erfindung ist es vorgesehen, dass der Ziel-Programmcode von der Rechen-Vorrichtung an eine Betriebs-Vorrichtung übertragen wird, und das technische Gerät durch die Betriebs-Vorrichtung mit dem Ziel-Programmcode betrieben wird.

Dadurch kann der erzeugte Programmcode auf einem Ziel-Gerät, wie auf einem Edge-Gerät, performant ausgeführt werden.

In einer Weiterbildung der Erfindung ist es vorgesehen, dass der Betrieb des technischen Geräts die Auswertung von Analyse-Daten des technischen Geräts betrifft, und die Betriebs-Daten durch die Analyse-Daten gebildet sind, welche von einer entsprechenden Erfassungs-Vorrichtung erfasst werden, welche von der Betriebs-Vorrichtung umfasst ist.

Dadurch kann auf einfache und effiziente Weise ein Programmcode zur Analyse von erfassten Bildern, beispielsweise durch eine Kamera bei der visuellen Inspektion von hergestellten Produkten durch eine entsprechende Produktionsmaschine, erzeugt werden.

In einer Weiterbildung der Erfindung ist es vorgesehen, dass der Betrieb des technischen Geräts die Erzeugung von Steuer-Daten zur Steuerung des technischen Geräts betrifft, und die Betriebs-Daten durch die Steuer-Daten gebildet sind.

Dadurch kann auf einfache und effiziente Weise ein Programmcode zur Steuerung eines Geräts, wie eine Produktionsmaschine zur Herstellung von Produkten, oder Betriebsgeräten wie Pumpen, Motoren, Antriebe, etc., erzeugt werden.

In einer Weiterbildung der Erfindung ist es vorgesehen, dass die Markierungen der bereitgestellten Betriebs-Daten mithilfe eines bereitgestellten Analyse-Modells auf Basis künstlicher Intelligenz erzeugt werden, und die Analyse-Daten Bild-Daten sind, und in den Bild-Daten die Markierungen mithilfe des Analyse-Modells vordefinierte Objekte oder Strukturen festgelegt werden.

Dadurch können für die Markierungen der Betriebs-Daten beispielsweise Bild-Identifizierungs-Markierungen, sogenannte "text tokens" erzeugt werden, welche den Bildkontext der Bild-Daten beschreiben.

Diese Text-Tokens können dann in die Eingabeaufforderung des großen Sprach-Modells injiziert, um zu erreichen, dass noch besser passende Programmcodes oder Bausteine von/für Programmcodes vorgeschlagen beziehungsweise generiert werden können

Dadurch kann auf einfache und effiziente Weise ein Programmcode zur Analyse von erfassten Bildern, beispielsweise bei der Objekterkennung bei der visuellen Inspektion von hergestellten Produkten durch eine entsprechende Produktionsmaschine, erzeugt werden.

Die erfindungsgemäße Aufgabe wird auch durch ein System zum Erzeugen eines Programmcodes zum Betreiben eines technischen Geräts durch eine Betriebs-Vorrichtung mit Betriebs-Daten gelöst, umfassend eine Rechen-Vorrichtung mit einem Prozessor und einem Speicher, wobei das System dazu eingerichtet ist, das erfindungsgemäße Verfahren auszuführen.

In einer Weiterbildung der Erfindung ist es vorgesehen, dass das System ferner eine Betriebs-Vorrichtung aufweist, welche dazu eingerichtet ist, das technische Gerät mit dem Programmcode zu betreiben.

Die erfindungsgemäße Aufgabe wird auch durch ein Computer-Programm-Produkt mit darin gespeicherten maschinenlesbaren Anweisungen gelöst, wobei die Anweisungen, wenn sie von dem erfindungsgemäßen System ausgeführt werden, dieses veranlassen, das erfindungsgemäße Verfahren auszuführen.

Die erfindungsgemäße Aufgabe wird auch durch ein computerlesbares Speichermedium oder einen computerlesbaren Datenträger gelöst, umfassend Befehle, die bei der Ausführung durch einen Computer diesen veranlassen, das erfindungsgemäße Verfahren oder die erfindungsgemäßen Verfahrens-Schritte auszuführen.

Die erfindungsgemäße Aufgabe wird auch durch einen Computerlesbarer Datenträger gelöst, auf dem das erfindungsgemäße Computer-Programm-Produkt gespeichert ist.

Die erfindungsgemäße Aufgabe wird auch durch ein Datenträgersignal gelöst, das das erfindungsgemäße Computer-Programm-Produkt überträgt.

Die Erfindung wird nachfolgend anhand eines in den beigeschlossenen Zeichnungen dargestellten Ausführungsbeispiels näher erläutert. In den Zeichnungen zeigt:
- Fig. 1: ein erstes Ausführungsbeispiel für ein erfindungsgemäßes System,
- Fig. 2: ein zweites Ausführungsbeispiel für ein erfindungsgemäßes System,
- Fig. 3: ein Ausführungsbeispiel für ein erfindungsgemäßes Verfahren,
- Fig. 4: ein weiteres Ausführungsbeispiel für ein Ablaufdiagramm des erfindungsgemäßen Verfahrens,
- Fig. 5: ein weiteres Ausführungsbeispiel für ein Ablaufdiagramm des erfindungsgemäßen Verfahrens,
- Fig. 6: ein Beispiel für ein erfasstes Bild zur Verarbeitung durch das erfindungsgemäße Verfahren,
- Fig. 7: ein Beispiel für eine automatisch durchgeführte Segmentierung,
- Fig. 8: ein Beispiel für DSL-Instruktionen zum Parsen.

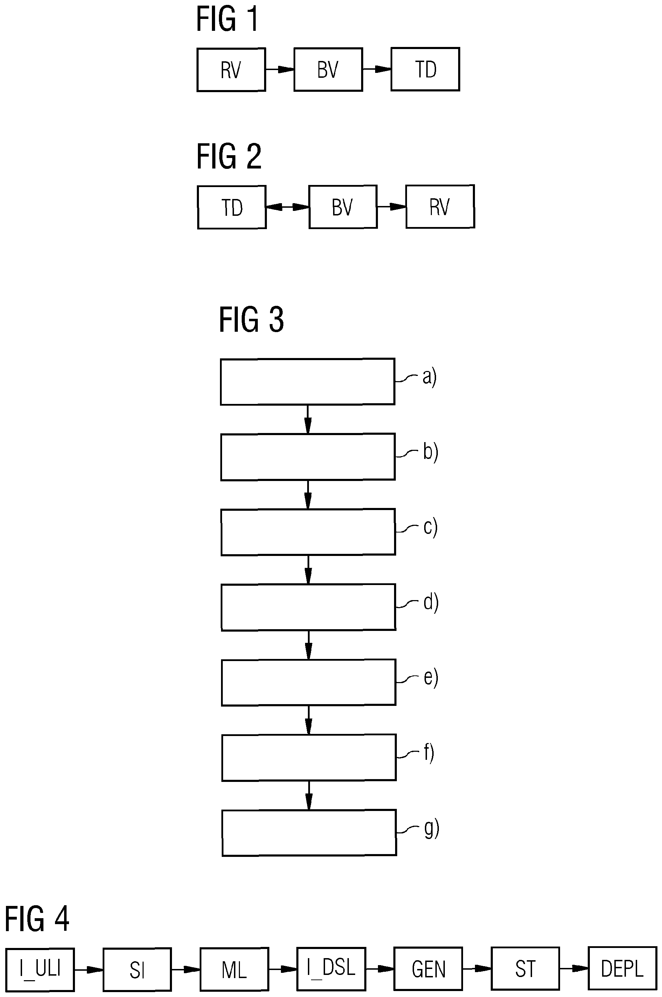

**Fig. 1** und **Fig. 2** zeigen jeweils Ausführungsbeispiele für ein erfindungsgemäßes System.

Das System zur Erzeugung eines Programmcodes zum Betreiben eines technischen Geräts TD mit Betriebs-Daten umfasst eine Rechen-Vorrichtung (RV) mit einem Prozessor und einem Speicher.

Das System dazu eingerichtet ist, das erfindungsgemäße Verfahren auszuführen.

Das System weist ferner eine Betriebs-Vorrichtung BV auf, welche dazu eingerichtet ist, das technische Gerät TD mit dem Programmcode zu betreiben.

Beim System nach Fig. 1 erfolgt der Betrieb des technischen Geräts mithilfe von Steuer-Daten zur Steuerung des technischen Geräts, beispielsweise in Form eines Programmcodes.

Es werden Steuer-Daten erzeugt, welche Betriebs-Daten zum Betrieb des technischen Geräts TD bilden.

Beim System nach Fig. 2 erfolgt der Betrieb des technischen Geräts mithilfe von Analyse-Daten des technischen Geräts, beispielsweise Bilddaten von der Erzeugung eines Produkts durch eine entsprechende Produktions-Vorrichtung.

Die Betriebs-Daten durch die Analyse-Daten gebildet sind, welche von einer entsprechenden Erfassungs-Vorrichtung, wie eine Kamera erfasst werden.

Fig. 3 stellt ein Ausführungsbeispiel für ein erfindungsgemäßes Verfahren in Form eines Ablaufdiagramms dar.

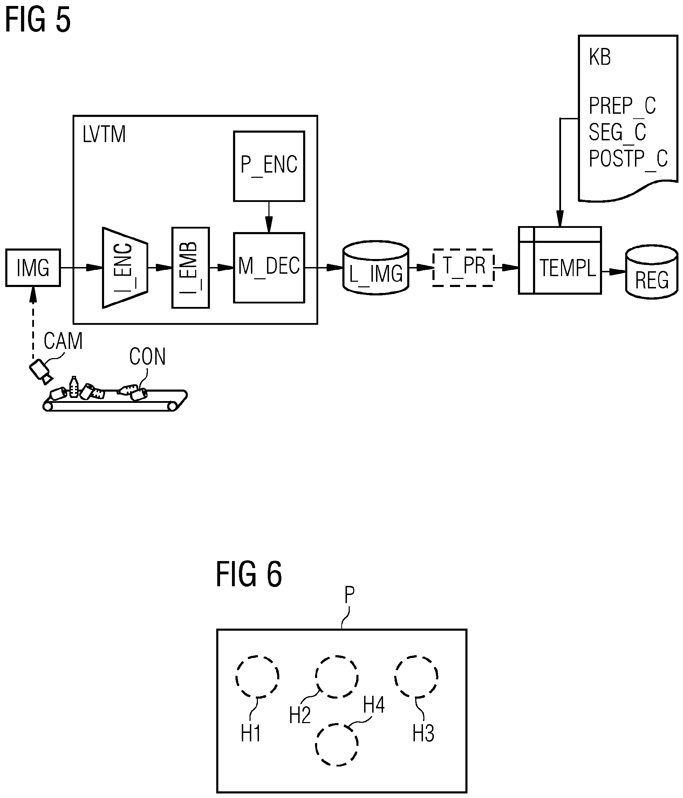

**Fig. 4** und **Fig. 5** zeigen ein weiteres Ausführungsbeispiel für ein Ablaufdiagramm des erfindungsgemäßen Verfahrens.

Der Prozess beginnt mit der Aufnahme unbeschrifteter Bilder, die dann unter Anwendung eines großen Bildanalyse-Transformations-Modells (engl. "large vision transformator model") segmentiert werden, um beispielsweise unterschiedliche visuelle Merkmale zu identifizieren.

Sogenannte "zero-shot learning" oder "one-shot-learning"-Lerntechniken ermöglichen eine schnelle Modellanpassung.

Das Einspeisen einer domänen-spezifische Sprache DSL (engl. "domain specific language") in den CoPilot-Kontext ermöglicht eine nahtlose Codegenerierung und Nachbearbeitung.

Dabei können Vorlagen TEMPL zur Reproduzierbarkeit in einem Artefakt-Register REG gespeichert werden, bevor das Modell für Echtzeit-Inferenz in einer Zielumgebung bereitgestellt wird.

Zunächst erfolgt also ein Erfassen I_ULI eines Bildes ohne Markierungen (engl. "ingest unlabeled image").

Bei diesem Prozess werden Rohbilder ohne zugehörige Beschriftungen oder Anmerkungen in das System aufgenommen, was eine weitere Verarbeitung und Analyse ermöglicht, um aussagekräftige Erkenntnisse oder Muster für die Qualitätskontrolle in der Fertigung zu extrahieren

Dann folgt ein Segmentieren SI des Bildes mithilfe eines großen Bildanalyse-Transformations-Modells (engl. "large vision transformator model"), welches ein Grundlagen-, Grund- oder Gründungs-Modell ist, welches verwendet wird, um Bilder basierend auf ihren visuellen Eigenschaften, Analysen und Nachbearbeitungen für nachgelagerte Aufgaben wie die Qualitätssicherung in verschiedene Bereiche oder Objekte zu segmentieren.

In weiterer Folge erfolgt automatisierte Markierung von Daten mithilfe maschinellen Lernens durch "zero-shot learning" oder "one-shot-learning".

Dieser Lernansatz ermöglicht es Modellen, von einer einzelnen oder einer minimalen Anzahl von Beispielen pro Klasse zu verallgemeinern, was eine schnelle Anpassung an neue oder ungesehene Daten ohne umfangreiche beschriftete Trainingsdatensätze ermöglicht.

Anschließend wird eine Eingabe I_DSL von DSL-Informationen an den CoPilot-Kontext durchgeführt.

Die Integration einer domänenspezifischen Sprache DSL in den CoPilot-Kontext beinhaltet die Einbettung domänenspezifischer Befehle oder Anweisungen in die CoPilot-Umgebung, um eine nahtlose Zusammenarbeit zwischen Fertigungsprofis und KI-Modellen zu ermöglichen, um Code-Teile zu generieren oder Aufgaben zu automatisieren.

Dies kann durch "prompt engineering" oder "retrieve, augment, generate", kurz RAG, erreicht werden, wobei die DSL in einer Knowledge Base gepflegt werden kann.

Die genannten Fertigungsprofis weisen keinerlei umfangreiche Programmierkenntnisse, wie beispielsweise in der Python-Programmierung vor.

Nachfolgend folgt ein Erzeugen GEN eines "post-processing"-Programmcodes mit dem CoPilot.

CoPilot nutzt Kl-Unterstützung, um Nachbearbeitungscode automatisch zu generieren und die Ausgabe der primären KI-Modelle oder Algorithmen zu verfeinern oder zu verbessern, wodurch der Entwicklungsprozess rationalisiert und die Effizienz verbessert wird.

Dann wird ein Speichern einer Vorlage TEMPL in einer Artefakt-Registrierung REG.

Das Speichern von Vorlagen, die Vor-/Nachbearbeitungscode sowie Modellcode für Rückschlüsse/Vorhersagen zur Laufzeit in einer Artefakt-Registrierung enthalten, ermöglicht die Speicherung und Versionierung wiederverwendbarer und bereitstellbarer Komponenten.

Abschießend erfolgt ein Verteilen DEPL des Modells an die Ziel-Umgebung des technischen Geräts TD.

Dazu gehört die Bereitstellung trainierter Vorlagen in der Zielproduktionsumgebung, z. B. Edge-Geräten oder Cloud-Servern, die Echtzeit-Inferenz und Integration in betriebliche Arbeitsabläufe ermöglichen, um einen Mehrwert in großem Maßstab zu schaffen.

Fig. 5 stellt ein weiteres Ausführungsbeispiel für ein Ablaufdiagramm des erfindungsgemäßen Verfahrens dar, basierend auf der Darstellung nach der vorhergehenden Figur.

Die Darstellung zeigt eine Bilderkennung mit Bilddaten, welche bei der Erzeugung eines Produkts durch eine entsprechende Produktions-Vorrichtung durch eine Kamera CAM erfasst wurden, wobei erzeugte Produkte auf einem Förderband CON an der Kamera CAM vorbei transportiert werden.

Ein erfasstes Bild IMG ist zunächst nicht markiert (engl. "unlabeled") und wird einem Bild-Encoder I_ENC zugeführt und es werden die sogenannten "image encodings" erzeugt.

Im Anschluss führt ein Masken-Dekoder M_DEC mit bereitgestellten Eingabe-Aufforderungen, welche durch einen Eingabe-Aufforderungs-Encoder P_ENC verarbeitet wurden, die Maskierungen durch, und es werden markierte Bilder L_IMG (engl. "labeled images") erzeugt und in einem Speicher gespeichert.

Durch eine nachfolgende Eingabe-Aufforderung werden dem CoPilot eine oder mehrere Text-Eingabe-Aufforderungen T_PR bereitgestellt.

Aus einer Wissensbasis-Datenbank KB werden Informationen hinsichtlich "pre-processing"-Programmcodes PREP_C, "post-processing"-Programmcodes POSTP_C und Segmentierungs-Codes SEG_C, welche Inferenz darstellen, bereitgestellt.

Die Text-Eingabe-Aufforderungen T_PR, sowie die "pre-processing"-Programmcodes PREP_C, die "post-processing"-Programmcodes POSTP_C und die Segmentierungs-Codes SEG_C werden zu einer Vorlage TEMPL vereinigt, welche wiederum angewendet wird, um ein PArsing durchzuführen, dessen erzeugte Ziel-Programmcodes in einer Artefakt-Registrierung REG gespeichert werden, oder zum Betrieb eines technischen Geräts angewendet werden.

Das technische Gerät ist vorzugsweise mit einem Klienten eines Klienten-Server-Systems verbunden.

Fig. 6 zeigt ein Beispiel für ein erfasstes Bild zur Verarbeitung durch das erfindungsgemäße Verfahren,

Es ist das Bild IMG dargestellt, welches von der Kamera CAM auf dem Förderband CON erfasst wurden.

Im Bild IMG ist ein Produkt erkennbar, nämlich eine Platte P mit Löchern H1-H4 in der Platte P.

Die Platte P wird im Verfahren automatisch segmentiert, wie zuvor erörtert, beispielsweise unter vordefinierten Qualitätskriterien.

Solche Qualitätskriterien können für die Platte P sein, dass vier Löcher vorhanden sein müssen, und die Distanz zwischen den Löchern immer gleich groß sein muss, wie etwa 5 cm.

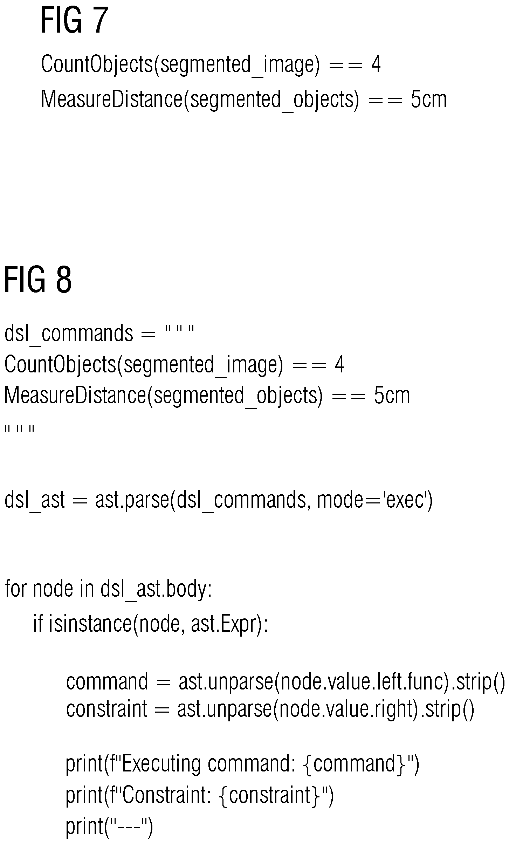

Fig. 7 stellt ein Beispiel für eine automatisch durchgeführte Segmentierung dar, bei welcher der gezeigte Programmcode auf Basis von DSL mit dem CoPilot erzeugt wurde.

Die erste Instruktion im Programmcode CountObjects(segmented_image) == 4 bedeutet, dass die Anweisung prüft, ob die Anzahl der segmentierten Objekte im Bild vier beträgt.

Die erste Instruktion im Programmcode MeasureDistance(segmented_objects) == 5cm bedeutet, dass die Anweisung prüft, ob die Distanz zwischen jedem Paar segmentierter Objekte, also die Löcher, exakt 5 cm beträgt.

Fig. 8 zeigt ein Beispiel für DSL-Instruktionen zum Parsen.

Es werden DSL-Anweisungen in einen abstrakter Syntaxbaum AST geparst und ein dadurch optimierten Programmcode erzeugt.

Der gezeigte Codeausschnitt analysiert die DSL-Befehle in einem AST und iteriert dann über die AST-Knoten, um jeden Befehl zusammen mit der zugehörigen Einschränkung zu extrahieren und auszuführen.

Folgende Funktionssignaturen (Implementierung der DSL-Befehle) sind dabei vorgesehen:
Die Funktion count_objects(segmented_image) verwendet ein Bild mit segmentierten Objekten als Eingabe und gibt die Anzahl der im Bild gefundenen segmentierten Objekte zurück.

Die Funktion measure_distance(segmented_objects, distance_threshold) verwendet eine Liste segmentierter Objekte und einen Entfernungsschwellenwert als Eingabe, misst den Abstand zwischen jedem Paar segmentierter Objekte und gibt eine Liste der Abstände zwischen den Objekten zurück.

Einfache Beispiele für eine DSL für Mess-Anwendungen sind hier
- CountObjects(segmented_image): Zähle die Anzahl an segmentierten Objekten im vorgegebenen Bild,
- MeasureDistance(segmented_objects): Vermesse die Distanz zwischen einem Paar von segmentierten Objekten,
- MeasureLength(segment): Vermesse die Länge eines vorgegebenen Segments,
- MeasureArea(region): Vermesse die Fläche in einem vorgegebenen Bereich des Bilds.

*Unabhängig vom grammatikalischen Geschlecht eines bestimmten Begriffes sind Personen mit männlicher, weiblicher oder anderer Geschlechteridentität mit umfasst.*

### Bezugszeichenliste

- BV: Betriebs-Vorrichtung
- CAM: Kamera
- CON: Förderband
- DEPL: Verteilen des Modells an Ziel-Umgebung
- DSL: domänen-spezifische Sprache (engl. "domain specific language")
- GEN: Erzeugen von "post-processing"-Programm-code mit CoPilot
- H1-H4: Loch
- I_DSL: Eingabe von DSL-Informationen an CoPilot-Kontext
- I_EMB: Bild-"embedding"
- I_ENC: Bild-Encoder
- I_ULI: Erfassen eines Bildes ohne Markierungen (engl. "ingest unöabeled image")
- IMG: Bild
- KB: Datenbank (engl. "knowledge base")
- L_IMG: Markierte Bilder (engl. "labeled images")
- LVTM: Großes Bildanalyse Transformations-Modell (engl. "large vision transformator model")
- M_DEC: Masken-Dekoder
- ML: Maschinelles Lernen mit "zero-shot learning" oder "one-shot-learning"
- P: Platte
- P_ENC: Eingabe-Aufforderungs-Encoder
- POSTP_C: "post-processing"-Programmcode
- PREP_C: "pre-processing"-Programmcode
- REG: Artefakt-Registrierung
- RV: Rechen-Vorrichtung
- SEG_C: Segmentierungs-Code, Inferenz
- SI: Segmentieren des Bildes mit LVTM
- ST: Speichern einer Vorlage TEMPL im Artefakt-Registrierung REG
- T_PR: Text-Eingabe-Aufforderung
- TD: technisches Gerät (engl. "technical device")
- TEMPL: Vorlage

## Patentansprüche

1. Computer-implementiertes Verfahren zum Erzeugen eines Programmcodes zum Betreiben eines technischen Geräts (TD) durch eine Betriebs-Vorrichtung (BV) mit Betriebs-Daten, wobei folgende Schritte ausgeführt werden:
a) Bereitstellen der Betriebs-Daten, umfassend Markierungen (L_IMG) der Betriebs-Daten hinsichtlich vordefinierter Merkmale, welche die Betriebs-Daten strukturell und/oder funktionell beschreiben, an ein großes Sprach-Modell (LLM)
b) Bereitstellen einer Eingabe-Aufforderung (T_PR), umfassend Definitionen zur Analyse in einer domänen-spezifischen Sprache (DSL) und Anweisungen zur Erzeugung des Programmcodes, an das große Sprach-Modell (LLM),
c) Erzeugen des Programmcodes mithilfe des großen Sprach-Modells (LLM) unter Verwendung der Betriebs-Daten und der Eingabe-Aufforderung, und Bereitstellen des Programmcodes an eine Rechen-Vorrichtung,
d) Bereitstellen von Referenz-Programmcodes zum Betrieb eines allgemeinen technischen Geräts, an die Rechen-Vorrichtung,
e) Klassifizieren der Referenz-Programmcodes mithilfe eines bereitgestellten Programmcode-Modells auf Basis künstlicher Intelligenz, und Zuordnen in Gruppen unter Berücksichtigung der Merkmale, durch die Rechen-Vorrichtung,
f) Erzeugen von semantischen Programmcode-Beschreibungen mithilfe des Programmcode-Modells für die Merkmale und/oder Übergabe-Parameter der Referenz-Programmcodes, durch die Rechen-Vorrichtung,
g) Parsen der Referenz-Programmcodes und des erzeugten Programmcodes unter Anwendung der Merkmale, wobei in den Referenz-Programmcodes die Programmcode-Beschreibungen berücksichtigt werden, und Erhalten eines Ziel-Programmcodes, durch die Rechen-Vorrichtung.

2. Verfahren nach Anspruch 1, wobei der Ziel-Programmcode von der Rechen-Vorrichtung (RV) an eine Betriebs-Vorrichtung (BV) übertragen wird, und das technische Gerät (TD) durch die Betriebs-Vorrichtung (BV) mit dem Ziel-Programmcode betrieben wird.

3. Verfahren nach Anspruch 1 oder 2, wobei der Betrieb des technischen Geräts (TD) die Auswertung von Analyse-Daten des technischen Geräts (TD) betrifft, und die Betriebs-Daten durch die Analyse-Daten gebildet sind, welche von einer entsprechenden Erfassungs-Vorrichtung erfasst werden, welche von der Betriebs-Vorrichtung (BV) umfasst ist.

4. Verfahren Anspruch 1 oder 2, wobei der Betrieb des technischen Geräts (TD) die Erzeugung von Steuer-Daten zur Steuerung des technischen Geräts (TD) betrifft, und die Betriebs-Daten durch die Steuer-Daten gebildet sind.

5. Verfahren nach Anspruch 3, wobei die Markierungen (L_IMG) der bereitgestellten Betriebs-Daten mithilfe eines bereitgestellten Analyse-Modells auf Basis künstlicher Intelligenz erzeugt werden, und die Analyse-Daten Bild-Daten sind, und in den Bild-Daten die Markierungen (L_IMG) mithilfe des Analyse-Modells vordefinierte Objekte oder Strukturen festgelegt werden.

6. System zum Erzeugen eines Programmcodes zum Betreiben eines technischen Geräts (TD) durch eine Betriebs-Vorrichtung (BV) mit Betriebs-Daten, umfassend eine Rechen-Vorrichtung (RV) mit einem Prozessor und einem Speicher, wobei das System dazu eingerichtet ist, das Verfahren nach einem der vorhergehenden Ansprüche auszuführen.

7. System nach dem vorhergehenden Anspruch, wobei das System ferner eine Betriebs-Vorrichtung (BV) aufweist, welche dazu eingerichtet ist, das technische Gerät (TD) mit dem Programmcode zu betreiben.

8. Computer-Programm-Produkt mit darin gespeicherten maschinenlesbaren Anweisungen, die, wenn sie von dem System nach einem der vorhergehenden Ansprüche ausgeführt werden, dieses veranlassen, das Verfahren nach einem der vorhergehenden Ansprüche auszuführen.

9. Computerlesbares Speichermedium oder computerlesbarer Datenträger, umfassend Befehle, die bei der Ausführung durch einen Computer diesen veranlassen, das Verfahren oder die Verfahrens-Schritte nach einem der vorhergehenden Verfahrens-Ansprüche auszuführen.

10. Computerlesbarer Datenträger, auf dem das Computer-Programm-Produkt nach Anspruch 8 gespeichert ist.

11. Datenträgersignal, das das Computer-Programm-Produkt nach Anspruch 8 überträgt.
